(19) Europäisches Patentamt
European Patent Office
Office européen des brevets

(11) **EP 4 324 959 A1**

(12) **EUROPEAN PATENT APPLICATION**
published in accordance with Art. 153(4) EPC

(43) Date of publication:
**21.02.2024 Bulletin 2024/08**

(21) Application number: **21937043.4**

(22) Date of filing: **22.12.2021**

(51) International Patent Classification (IPC):
*C25B 15/023* (2021.01)    *C25B 1/04* (2021.01)
*C25B 9/00* (2021.01)    *C25B 9/23* (2021.01)
*C25B 15/00* (2006.01)

(52) Cooperative Patent Classification (CPC):
**C25B 1/04; C25B 9/00; C25B 9/23; C25B 15/00;
C25B 15/023;** Y02E 60/36; Y02P 20/133

(86) International application number:
**PCT/JP2021/047525**

(87) International publication number:
**WO 2022/219850 (20.10.2022 Gazette 2022/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.04.2021  JP 2021067897**

(71) Applicant: ENEOS Corporation
Chiyoda-ku
Tokyo 100-8162 (JP)

(72) Inventors:
• OKUMO Ichiro
Tokyo 100-8162 (JP)
• TAKAMI Hirofumi
Tokyo 100-8162 (JP)
• HARADA Kosuke
Tokyo 100-8162 (JP)

(74) Representative: **Algemeen Octrooi- en
Merkenbureau B.V.
P.O. Box 645
5600 AP Eindhoven (NL)**

(54) **DETERIORATION DETERMINATION SUPPORT DEVICE, WATER ELECTROLYSIS DEVICE,
AND DETERIORATION DETERMINATION SUPPORT METHOD**

(57)    A device (40) for supporting deterioration determination includes: a first calculating unit (42) that: acquires a dataset including a plurality of reaction condition values and a voltage in a first period and in a second period; and uses the dataset and a calculation formula to calculate a parameter group of the calculation formula for each period; a second calculating unit (44) that substitutes a reaction condition value in the calculation formula in which the parameter group is incorporated to calculate a comparison target value for each period; and a third calculating unit (46) that calculates a deterioration degree of the water electrolysis module (2) based on a difference between a first comparison target value and a second comparison target value.

FIG. 1

EP 4 324 959 A1

**Description**

[TECHNICAL FIELD]

The present invention relates to a device for supporting deterioration determination, a device for water electrolysis, and a method for supporting deterioration determination.

[BACKGROUND ART]

In recent years, renewable energy obtained by wind power, sunlight, or the like has attracted attention as energy capable of suppressing carbon dioxide emission in the generation process as compared with energy obtained by thermal power generation. The power generated from the renewable energy is accumulated by a stationary energy storage system, whereby the output power can be smoothed. In recent years, as the stationary energy storage system, water electrolysis modules for producing hydrogen gas by electrolysis of water have been widely used. As the water electrolysis module, for example, as disclosed in Patent Literature 1, a solid polymer water electrolysis module, an alkaline water electrolysis module, a solid oxide water electrolysis module, and the like are known.

[PRIOR ART DOCUMENT]

[Patent Literature]

[Patent Literature 1] JP 2018-165392 A

[SUMMARY OF INVENTION]

[TECHNICAL PROBLEM]

In general, a water electrolysis module, which is a component of a device for water electrolysis, tends to deteriorate due to an influence of operation time, temperature, the number of times of starting and stopping, and the like, and hydrogen production efficiency thereof tends to gradually decrease. In order to exhibit a stable function as an energy storage system, it is desirable to grasp the deterioration state of the water electrolysis module. On the other hand, a decrease in hydrogen gas production efficiency can be led by switching the normal operation of the water electrolysis module to an operation for deterioration determination in order to grasp the deterioration state of the water electrolysis module. Therefore, it is required to grasp the deterioration state while continuing the normal operation state of the water electrolysis module. However, since the reaction conditions can change every second during the normal operation, it is difficult to determine the deterioration of the water electrolysis module.

The present invention has been made in view of such a situation, and an object of the present invention is to provide a technique to support deterioration determination for a water electrolysis module during normal operation.

[SOLUTION TO PROBLEM]

An aspect of the present invention is a device for supporting deterioration determination. The device includes: a first calculating unit that: acquires a dataset including a plurality of reaction condition values and a voltage each of which is measured, or derived from a value measured, in a first period and in a second period after the first period and related to a water electrolysis reaction in a water electrolysis module; and uses the dataset and a predetermined calculation formula to calculate a parameter group of the calculation formula for each period; a second calculating unit that substitutes a predetermined reaction condition value in the calculation formula in which the parameter group is incorporated to calculate a comparison target value for each period; and a third calculating unit that calculates a deterioration degree of the water electrolysis module based on a difference between: a first comparison target value calculated from the calculation formula in which the parameter group in the first period is incorporated; and a second comparison target value calculated from the calculation formula in which the parameter group in the second period is incorporated.

Another aspect of the present invention is a device for supporting deterioration determination. The device includes: a first calculating unit that: acquires a dataset including a plurality of reaction condition values and a voltage each of which is measured, or derived from a value measured, in a first period and in a second period after the first period and related to a water electrolysis reaction in a water electrolysis module; and uses the dataset and a predetermined calculation formula to calculate a parameter group of the calculation formula for each period; and a fourth calculating unit that calculates a deterioration degree of the water electrolysis module based on a difference between: at least one coefficient constituting the parameter group in the first period; and the coefficient in the second period.

Another aspect of the present invention is a device for water electrolysis. The system includes: a water electrolysis module; and the device for supporting deterioration determination according to any of the aspects.

Another aspect of the present invention is a method for supporting deterioration determination. The method includes: acquiring a dataset including a plurality of reaction condition values and a voltage each of which is related to a water electrolysis reaction in a water electrolysis module, in a first period and in a second period after the first period; using the dataset and a predetermined calculation formula to calculate a parameter group of the calculation formula for each period; substituting a predetermined reaction condition value in the calculation formula in which the parameter group is incorporated to calculate a comparison target value for each period; and calculating a deterioration degree of the water electrolysis module based on a difference between: a first comparison target value calculated from the calculation formula in which the parameter group in the first period is incorporated; and a second comparison target value calculated from the calculation formula in which the parameter group in the second period is incorporated.

Any combination of the above components and any modification of the expressions of the present disclosure among methods, apparatuses, systems, and the like are also effective as an aspect of the present disclosure.

[ADVANTAGEOUS EFFECTS OF INVENTION]

According to the present invention, it is possible to support deterioration determination for a water electrolysis module during normal operation.

[BRIEF DESCRIPTION OF DRAWINGS]

Fig. 1 is a schematic diagram of a device for water electrolysis according to an embodiment.
Fig. 2 is a graph showing current-voltage characteristics of a water electrolysis module.
Fig. 3 is a flowchart of a method for supporting deterioration determination according to an example.
Fig. 4A is a graph showing a relationship between time and current in a water electrolysis operation test performed in Examples. Fig. 4B is a chart showing corrected parameter groups, various voltages, and deterioration degrees in Examples.

[DESCRIPTION OF EMBODIMENTS]

Hereinafter, the present invention will be described based on preferred embodiments with reference to the drawings. The embodiments are not intended to limit the technical scope of the present invention but are examples, and all features described in the embodiments and combinations thereof are not necessarily essential to the invention. Therefore, the contents of the embodiments can be subjected to many design changes such as changes, additions, and deletions of components without departing from the spirit of the invention defined in the claims. A new embodiment to which a design change is made has the effect of each of the combined embodiments and the modifications. In the embodiments, the contents capable of such a design change are emphasized with notations such as "of the present embodiment" and "in the present embodiment", but the design change is allowed even in the contents without such notations. Any combination of the above components is also effective as an aspect of the present invention. The same or equivalent components, members, and processes illustrated in the drawings are denoted by the same sign, and redundant descriptions will be omitted as appropriate. In addition, the scale and shape of each part illustrated in each drawing are set for convenience in order to facilitate descriptions, and are not limitedly interpreted unless otherwise specified. In addition, when the terms "first", "second", and the like are used in the present specification or claims, the terms do not represent any order or importance, but are used to distinguish one configuration from another. In addition, in each drawing, some members that are not important for describing the embodiment are omitted.

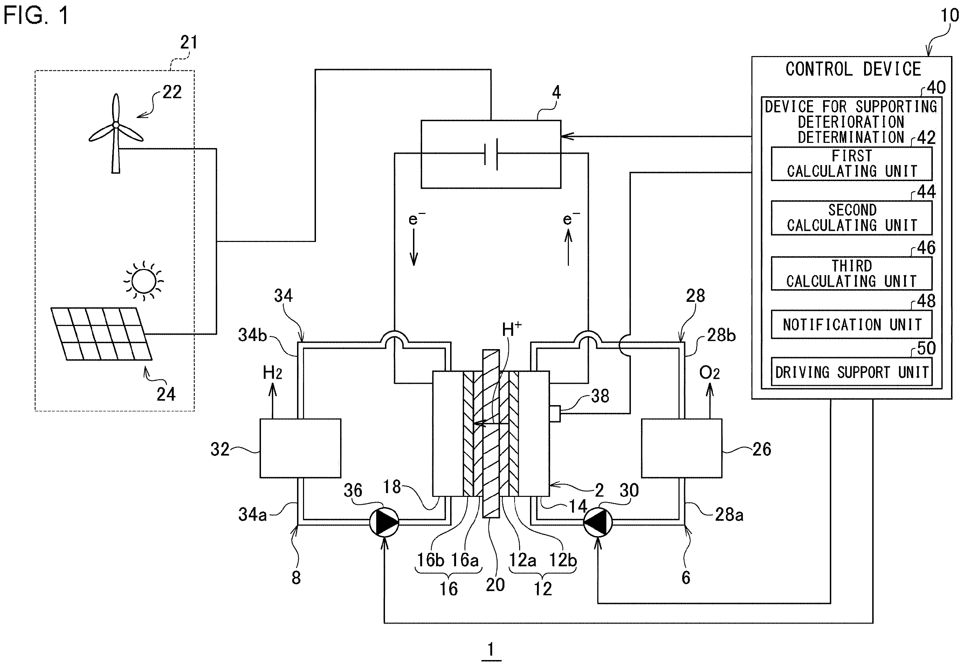

Fig. 1 is a schematic diagram of a device for water electrolysis according to an embodiment. The device 1 for water electrolysis includes a water electrolysis module 2, a power supply 4, a first supply mechanism 6, a second supply mechanism 8, and a control device 10. In the present disclosure, the water electrolysis module 2 may be composed of a single cell, a plurality of cells, a stack in which a plurality of cells are connected, a plurality of stacks, or a combination thereof.

The water electrolysis module 2 is an electrolyzer that generates hydrogen by electrolysis of water. The water electrolysis module 2 according to the present embodiment is a solid polymer membrane type device for water electrolysis using a solid ion exchange membrane. The water electrolysis module 2 includes an oxygen generating electrode 12, an oxygen generating electrode chamber 14, a hydrogen generating electrode 16, a hydrogen generating electrode chamber 18, and a membrane 20.

The oxygen generating electrode 12 is an electrode where an oxidation reaction occurs and is defined as a positive electrode (anode). The oxygen generating electrode 12 includes a catalyst layer 12a and a gas diffusion layer 12b. The catalyst layer 12a contains, for example, iridium (Ir) or platinum (Pt) as a catalyst. The catalyst layer 12a may contain other metals or metal compounds. The catalyst layer 12a is disposed in contact with one main surface of the membrane 20. The gas diffusion layer 12b is formed of a conductive porous body or the like. As a material constituting the gas diffusion layer 12b, a known material can be used. The oxygen generating electrode 12 is equipped in the oxygen generating electrode chamber 14. The space excluding the oxygen generating electrode 12 in the oxygen generating electrode chamber 14 constitutes a flow path of water and oxygen.

The hydrogen generating electrode 16 is an electrode where a reduction reaction occurs and is defined as a negative electrode (cathode). The hydrogen generating electrode 16 includes a catalyst layer 16a and a gas diffusion layer 16b. The catalyst layer 16a contains, for example, platinum as a catalyst. The catalyst layer 16a may contain other metals or metal compounds. The catalyst layer 16a is disposed in contact with the other main surface of the membrane 20. The gas diffusion layer 16b is formed of a conductive porous body or the like. As a material constituting the gas diffusion layer 16b, a known material can be used. The hydrogen generating electrode 16 is equipped in the hydrogen generating electrode chamber 18. The space excluding the hydrogen generating electrode 16 in the hydrogen generating electrode chamber 18 constitutes a flow path of water and hydrogen.

The oxygen generating electrode 12 and the hydrogen generating electrode 16 are separated by the membrane 20. The membrane 20 is disposed between the oxygen generating electrode 12 and the hydrogen generating electrode 16. The membrane 20 of the present embodiment is composed of a proton exchange membrane (PEM), which is one type of solid polymer membrane. The PEM is not particularly limited as long as it is a material through which protons ($H^+$) conduct, and examples thereof include a fluorine-based ion exchange membrane having a sulfonate group.

The reaction during water electrolysis in the water electrolysis module 2 is as follows.

Anodic reaction during electrolysis: $2H_2O \rightarrow O_2 + 4H^+ + 4e^-$
Cathodic reaction during electrolysis: $4H^+ + 4e^- \rightarrow 2H_2$

On the oxygen generating electrode 12, water is electrolyzed to generate oxygen gas, protons, and electrons. The protons move through the membrane 20 toward the hydrogen generating electrode 16. The electrons flow into the positive electrode of the power supply 4. The oxygen gas is discharged to the outside through the oxygen generating electrode chamber 14. On the hydrogen generating electrode 16, hydrogen gas is generated by a reaction between electrons supplied from the negative electrode of the power supply 4 and protons having moved through the membrane 20. The hydrogen gas is discharged to the outside through the hydrogen generating electrode chamber 18.

The power supply 4 is a DC power supply that supplies power to the water electrolysis module 2. When power is supplied from the power supply 4 to the water electrolysis module 2, a predetermined electrolysis voltage is applied between the oxygen generating electrode 12 and the hydrogen generating electrode 16 of the water electrolysis module 2, and an electrolysis current flows. The power supply 4 is supplied with power from a power supply apparatus 21 and supplies power to the water electrolysis module 2. The power supply apparatus 21 of the present embodiment is constituted with a power generation apparatus that generates power using renewable energy, for example, a wind power generation apparatus 22, a solar power generation apparatus 24, or the like. Note that the power supply apparatus 21 is not limited to a power generation apparatus using renewable energy, and may be a system power supply, a power storage apparatus storing power from a renewable energy power generation apparatus or a system power supply, or the like. In addition, a combination of two or more thereof may be used.

The first supply mechanism 6 supplies water to the oxygen generating electrode chamber 14. The first supply mechanism 6 includes a first circulation tank 26, a first circulation path 28, and a first circulation device 30. The first circulation tank 26 stores water that is supplied to the oxygen generating electrode chamber 14 and recovered from the oxygen generating electrode chamber 14. For example, the first circulation tank 26 stores pure water.

The first circulation tank 26 and the oxygen generating electrode chamber 14 are connected through the first circulation path 28. The first circulation path 28 includes a forward path portion 28a to supply water from the first circulation tank 26 to the oxygen generating electrode chamber 14, and a return path portion 28b to recover water from the oxygen generating electrode chamber 14 to the first circulation tank 26. The first circulation device 30 is provided, for example, in the middle of the forward path portion 28a. By driving the first circulation device 30, water flows in the first circulation path 28 and circulates between the first circulation tank 26 and the oxygen generating electrode chamber 14. As the first circulation device 30, for example, various pumps such as a gear pump and a cylinder pump, a natural flow type device, and the like can be used.

The first circulation tank 26 also functions as a gas-liquid separator. Since oxygen is generated by the electrode reaction on the oxygen generating electrode 12, the water recovered from the oxygen generating electrode chamber 14 contains gaseous oxygen and dissolved oxygen. The gaseous oxygen is separated from the water in the first circulation tank 26 and taken out of the system. The water from which oxygen is separated is supplied to the water electrolysis module 2 again. A gas-liquid separator may be provided separately from the first circulation tank 26.

The second supply mechanism 8 supplies water to the hydrogen generating electrode chamber 18. The second supply mechanism 8 includes a second circulation tank 32, a second circulation path 34, and a second circulation device 36. The second circulation tank 32 stores water that is supplied to the hydrogen generating electrode chamber 18 and recovered from the hydrogen generating electrode chamber 18. For example, the second circulation tank 32 stores pure water.

The second circulation tank 32 and the hydrogen generating electrode chamber 18 are connected through the second circulation path 34. The second circulation path 34 includes a forward path portion 34a to supply water from the second circulation tank 32 to the hydrogen generating electrode chamber 18, and a return path portion 34b to recover water from the hydrogen generating electrode chamber 18 to the second circulation tank 32. The second circulation device 36 is provided, for example, in the middle of the forward path portion 34a. By driving the second circulation device 36, water flows in the second circulation path 34 and circulates between the second circulation tank 32 and the hydrogen generating electrode chamber 18. As the second circulation device 36, for example, various pumps such as a gear pump and a cylinder pump, a natural flow type device, and the like can be used.

The second circulation tank 32 also functions as a gas-liquid separator. Since hydrogen is generated by the electrode reaction on the hydrogen generating electrode 16, the water recovered from the hydrogen generating electrode chamber 18 contains gaseous hydrogen and dissolved hydrogen. The gaseous hydrogen is separated from the water in the second circulation tank 32 and taken out of the system. The water from which hydrogen is separated is supplied to the water electrolysis module 2 again. A gas-liquid separator may be provided separately from the second circulation tank 32.

The structure of the device 1 for water electrolysis is not limited to that described above. For example, the water electrolysis module 2 may be anion exchange membrane (AEM) type, alkaline type, solid oxide type, or the like. When the water electrolysis module 2 is PEM type, the second supply mechanism 8 can be omitted. In this case, a pipe to take out hydrogen gas to the outside of the system is connected to the hydrogen generating electrode chamber 18. It may be a configuration in which water is not returned from the oxygen generating electrode chamber 14 to the first circulation tank 26 but sent from the oxygen generating electrode chamber 14 to the outside of the system. The water electrolysis module 2 may also include a plurality of cells or a plurality of stacks. In this case, as an example, each of the cells or each of the stacks are arranged in the same direction such that the oxygen generating electrode chamber 14 and the hydrogen generating electrode chamber 18 are arranged in the same direction, and are stacked with an energizing plate interposed between the adjacent cells or stacks. As a result, each of the cells or each of the stacks are electrically connected in series. The energizing plate is made of a conductive material such as metal.

The control device 10 controls the operation of the device 1 for water electrolysis. The control device 10 is realized by an element or a circuit such as a CPU or a memory for computers as the hardware configuration, and is realized by a computer program or the like as the software configuration, and is illustrated as functional blocks realized by cooperation thereof in Fig. 1. It should be understood by those skilled in the art that the functional blocks can be realized in various forms by a combination of hardware and software.

Values of various reaction conditions related to the water electrolysis reaction in the water electrolysis module 2 are input to the control device 10 from a sensor 38 provided in the device 1 for water electrolysis. The sensor 38 repeatedly measures values of various reaction conditions at a predetermined timing, and sends measurement results to the control device 10. The control device 10 or the device 40 for supporting deterioration determination described later holds the acquired measurement results in the memory. If necessary, the control device 10 or the device 40 for supporting deterioration determination derives a reaction condition value from the value measured by the sensor 38. The reaction conditions related to the water electrolysis reaction include voltage, current, water temperature, oxygen gas pressure, hydrogen gas pressure, and the like. Hereinafter, in the present disclosure, the values excluding the voltage among these are referred to as "reaction condition value". In addition, the reaction condition value and the voltage are collectively referred to as "dataset".

For example, the sensor 38 includes a known voltmeter, measures the potential of the oxygen generating electrode 12 and the hydrogen generating electrode 16 or the voltage of the water electrolysis module 2 (so-called stack voltage or cell voltage), and sends them to the control device 10. The potential of each electrode and the voltage of the water electrolysis module 2 can be detected by a known method. For example, when the sensor 38 detects the potential of each electrode, a reference electrode is provided on the membrane 20. The reference electrode is held at the reference electrode potential. For example, the reference electrode is a reversible hydrogen electrode (RHE). Then, one terminal of the voltmeter is connected to the reference electrode, and the other terminal is connected to the electrode to be detected, and the potential of the electrode with respect to the reference electrode is detected. In addition, when the sensor 38 detects the voltage of the water electrolysis module 2, one terminal of the voltmeter is connected to the oxygen generating electrode 12 and the other terminal is connected to the hydrogen generating electrode 16, and the potential difference between both electrodes, that is, the voltage, is detected. When the sensor 38 detects the voltage, the reference electrode can be omitted.

The sensor 38 includes a known ammeter, measures an electric current that flows between the oxygen generating electrode 12 and the hydrogen generating electrode 16, and sends the measurement value to the control device 10. The sensor 38 includes a known thermometer, measures the temperature of water flowing through the water electrolysis module 2, and sends the measurement value to the control device 10. The temperature of water flowing through the water electrolysis module 2 may be fictitiously determined by, for example, the temperature of water in the first supply mechanism 6 such as in the first circulation tank 26, the temperature of water in the second supply mechanism 8 such as in the second circulation tank 32, or an average value thereof.

In addition, the sensor 38 includes a known pressure gauge, measures the pressure of oxygen gas and hydrogen gas generated in the water electrolysis module 2, and sends the measurement values to the control device 10. The pressure of oxygen gas generated in the water electrolysis module 2 is, for example, the pressure of oxygen gas in the oxygen generating electrode chamber 14. The pressure of hydrogen gas generated in the water electrolysis module 2 is, for example, the pressure of hydrogen gas in the hydrogen generating electrode chamber 18.

The control device 10 controls the output of the power supply 4, the driving of the first supply mechanism 6 and the second supply mechanism 8, and the like on the basis of measurement results of the sensor 38. In addition, the control device 10 includes a device 40 for supporting deterioration determination. The device 40 for supporting deterioration determination is realized, in the same manner as the control device 10, by an element or a circuit such as a CPU or a memory for computers as the hardware configuration, and is realized by a computer program or the like as the software configuration, and is illustrated as functional blocks realized by cooperation thereof in Fig. 1. The device 1 for water electrolysis may include the device 40 for supporting deterioration determination independently of the control device 10. Specifically, the device 40 for supporting deterioration determination may be externally attached to the device 1 for water electrolysis. The device 40 for supporting deterioration determination may be connected to the device 1 for water electrolysis in a wired manner, a wireless manner, or a combination thereof through an electric communication line.

The device 40 for supporting deterioration determination acquires a dataset including a plurality of reaction condition values and a voltage each of which is related to the water electrolysis reaction by using the sensor 38 or the like, and obtains a parameter group by using these datasets and a predetermined calculation formula. A predetermined reaction condition value is substituted into the calculation formula in which this parameter group is incorporated to obtain a comparison target value. The deterioration degree of the water electrolysis module 2 is calculated based on a difference between: a first comparison target value calculated from the calculation formula in which the parameter group in a first period is incorporated; and a second comparison target value calculated from the calculation formula in which the parameter group in a second period after the first period is incorporated. The calculated deterioration degree can be used as an index for determining the deterioration state of the water electrolysis module 2. The predetermined reaction condition value can be appropriately set based on experiments, simulations, and the like. The device 40 for supporting deterioration determination includes a first calculating unit 42, a second calculating unit 44, a third calculating unit 46, a notification unit 48, and a driving support unit 50.

The first calculating unit 42 acquires a dataset including a plurality of reaction condition values and a voltage each of which is measured with the sensor 38 or derived from a value measured therewith. Thereafter, the parameter group is calculated by using the dataset and the predetermined calculation formula.

First, a voltage calculation formula is defined in advance as the predetermined calculation formula. The defined calculation formula is stored in the device 40 for supporting deterioration determination. The calculation formula stored in the device 40 for supporting deterioration determination may be rewritable from the outside. The device 40 for supporting deterioration determination may define the voltage calculation formula.

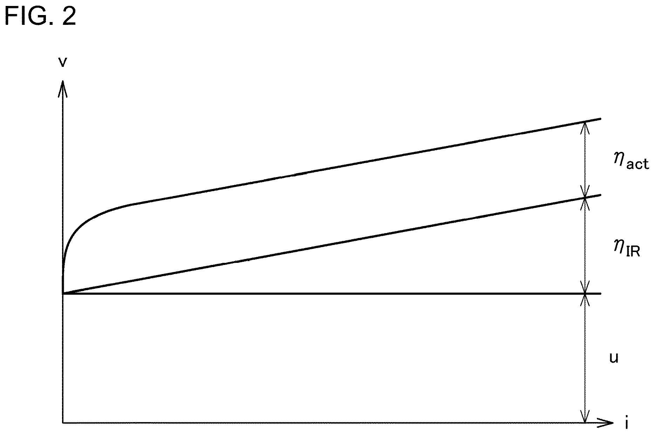

Fig. 2 is a graph showing current-voltage characteristics of the water electrolysis module 2. Fig. 2 approximately illustrates the current-voltage characteristics. As shown in Fig. 2, the voltage V (electrolysis voltage) of the water electrolysis module 2 can be defined as a value obtained by adding the activation overvoltage $\eta_{act}$ (so-called oxygen overvoltage) of the oxygen generating reaction and the resistance overvoltage $\eta_{IR}$ of the membrane 20 to the equilibrium potential u of the water electrolysis reaction. The voltage V may be a cell voltage, a total value of a plurality of cell voltages, an average value of a plurality of cell voltages, a stack voltage, a total value of a plurality of stack voltages, or an average value of a plurality of stack voltages.

Therefore, the voltage calculation formula can be expressed as the equation (1). Hereinafter, a voltage calculated by the voltage calculation formula is referred to as a calculated voltage $V_{sim}$.

$$(1) \quad V_{sim} = u + \eta_{act} + \eta_{IR}$$

In the equation (1), only the anodic reaction is considered. In addition, resistance loss caused by components other than the membrane 20 and concentration overvoltage are ignored. The voltage calculation formula may be added with an activation overvoltage term $\eta_{act\_}H_2$ of the hydrogen generation reaction, a concentration overvoltage term $\eta_{conc}$, a temperature correction term (a difference between the water temperature at the time of circulation and the water temperature at the time of electrode reaction), and the like.

The equilibrium potential u of the water electrolysis reaction can be calculated by, for example, the equation (2), that is, Nernst's equation.

$$(2) \quad u = 1.23 - a(T - 298.15) + \frac{RT}{2F} \ln \frac{P_{H_2} P_{O_2}^{0.5}}{P_{H_2O}}$$

In the equation (2), "1.23" is an equilibrium potential (theoretical electrolytic potential) in the standard state (1 atm and 25°C in the present disclosure). a is a constant, for example, 0.009. T is the absolute temperature of water flowing through the water electrolysis module 2. "298.15" is the absolute temperature of water in the standard state. R is a gas constant. F is Faraday constant. $P\_H_2$ is the pressure of hydrogen gas generated from the water electrolysis module 2. $P\_O_2$ is the pressure of oxygen gas generated from the water electrolysis module 2. $P\_H_2O$ is the saturated vapor pressure of water in the water electrolysis module 2. That is, the equilibrium potential u is calculated by the function of the absolute temperature T of water, the pressure $P\_H_2$ of hydrogen gas, the pressure $P\_O_2$ of oxygen gas, and the saturated vapor pressure $P\_H_2O$ of water.

T, $P\_H_2$, and $P\_O_2$ correspond to a reaction condition value measured by the sensor 38. $P\_H_2O$ corresponds to a reaction condition value derived from these reaction condition values. The equilibrium potential u may be calculated using a function of other measured values. The equilibrium potential u may be calculated by the equation (3), which ignores the pressure term, or may be a constant as shown in the equation (4).

$$(3) \; u = 1.23 - a(T - 298.15)$$

$$(4) \; u = 1.23$$

The activation overvoltage $\eta_{act}$ of the oxygen generation reaction can be calculated, for example, from the equation (5).

$$(5) \; \eta_{act} = f(T,i)$$

In the equation (5), T is the absolute temperature of water flowing through the water electrolysis module 2. i is a current density flowing through the water electrolysis module 2. That is, the activation overvoltage $\eta_{act}$ is an estimated value calculated by the function f of the absolute temperature T of water and the current density i. The current density i is calculated from a current value measured by the sensor 38. The activation overvoltage $\eta_{act}$ may be calculated using a function of other measured values or may be a constant.

An example of the function f for calculating the activation overvoltage $\eta_{act}$ is a function based on Butler-Volmer equation. The activation overvoltage $\eta_{act}$ can be calculated from the equation (6).

$$(6) \quad \eta_{act} = \frac{RT}{2\alpha F} \operatorname{arsinh} \frac{i}{2i_0 \exp\left\{-\frac{E_{exc}}{R}\left(\frac{1}{T} - \frac{1}{298.15}\right)\right\}}$$

In the equation (6), R is a gas constant. T is the absolute temperature of water flowing through the water electrolysis module 2. $\alpha$ is a charge transfer coefficient. F is Faraday constant. arsinh is an inverse hyperbolic function. i is a current density. $i_0$ is an exchange current density. $E_{exc}$ is the activation energy of electron transfer. $\alpha$, $i_0$, and $E_{exc}$ are a coefficient, and can be a component of the parameter group described later. In addition, they can be corrected through a method such as a curve fitting method conducted by the least squares method described later. Note that literature data may be substituted for $\alpha$, io, and $E_{exc}$.

Another example of the function f for calculating the activation overvoltage $\eta_{act}$ is a function based on Tafel equation. The activation overvoltage $\eta_{act}$ can be calculated from the equation (7).

$$(7) \quad \eta_{act} = \frac{RT}{2\alpha F} \ln\frac{i}{i_0}$$

In the equation (7), R is a gas constant. T is the absolute temperature of water flowing through the water electrolysis module 2. $\alpha$ is a charge transfer coefficient. F is Faraday constant. i is a current density. $i_0$ is an exchange current density.

The resistance overvoltage $\eta_{IR}$ can be calculated, for example, from the equation (8).

$$(8) \quad \eta_{IR} = r(T)i$$

In the equation (8), r is a resistance value of the membrane 20, T is the absolute temperature of water flowing through the water electrolysis module 2, and i is a current density flowing through the water electrolysis module 2. That is, the resistance overvoltage $\eta_{IR}$ is an estimated value calculated based on the resistance value r, which is a function of the absolute temperature T of water, and the current density i. In defining the function of the resistance value r, other measured values may be used, or a constant may be used.

Examples of the equation (8), which calculates the resistance overvoltage $\eta_{IR}$, include the equation (9).

$$(9) \quad \eta_{IR} = \frac{\delta i}{\sigma \exp\left\{ -\frac{E_{pro}}{R}\left( \frac{1}{T} - \frac{1}{298.15} \right) \right\}}$$

In the equation (9), $\delta$ is the thickness of the membrane 20. $\sigma$ is the proton conductivity of the membrane 20. i is a current density. $E_{pro}$ is a proton transfer activation energy. R is a gas constant. T is the absolute temperature of water flowing through the water electrolysis module 2. $\sigma$ and $E_{pro}$ are a coefficient, and can be a component of the parameter group described later. In addition, they can be corrected through a method such as a curve fitting method conducted by the least squares method described later. Note that literature data may be substituted for $\sigma$ and $E_{pro}$.

The denominator on the right side in the equation (9) represents a proton conductivity, which contributes to the membrane resistance. In the equation (9), the portion is represented by Arrhenius equation, but can be represented by the formula (10) as another example.

$$(10) \quad (a\lambda - b)\exp\left\{ c\left( \frac{1}{303} - \frac{1}{T} \right) \right\}$$

In the formula (10), a, b, and c are unique coefficients determined according to the material of the membrane 20 and the like. When the material of the membrane 20 is unknown and the values of a, b, and c cannot be specified, these coefficients can be a component of the parameter group described later. In addition, $\lambda$ represents the water content of the membrane 20. $\lambda$ is a coefficient, and can be a component of the parameter group described later. In addition, a, b, c, and $\lambda$ can be corrected through a method such as a curve fitting method conducted by the least squares method described later. Note that literature data may be substituted for a, b, c, and $\lambda$.

In addition, the resistance overvoltage $\eta_{IR}$ can also be expressed as the equation (11) with the resistance value r as a constant independent of temperature.

$$(11) \quad \eta_{IR} = r \times i$$

In the equation (11), i is a current density. r is the resistance value of the membrane 20 and is a constant. The resistance value r is determined by actual measurement or the like.

The first calculating unit 42 acquires a plurality of datasets for each period from output values of the sensor 38. This dataset includes, as components, various reaction condition values to be substituted into the calculation formula and a measurement voltage $V_{obs}$ measured by the sensor 38. Since the above-described voltage calculation formula is used in the present embodiment, examples of the reaction condition values include current, water temperature, hydrogen generation pressure, oxygen generation pressure, and the like. The first calculating unit 42 calculates the calculated voltage $V_{sim}$ by substituting the reaction condition values in a plurality of datasets into the voltage calculation formula, and corrects the parameter group so that the calculated voltage $V_{sim}$ is close to the measurement voltage $V_{obs}$.

In the present embodiment, the first period is a period where the water electrolysis module 2 presumably has not been deteriorated. This makes it possible to more precisely determine the life of the water electrolysis module 2. For example, a predetermined period immediately after the water electrolysis module 2 starts to be used can be presumed as the period where the water electrolysis module 2 has not been deteriorated. The period where the water electrolysis module 2 has not been deteriorated can be appropriately set based on experiments, simulations, and the like. The second period is a period where the water electrolysis module 2 is intended to be measured for its deterioration state.

Coefficients in each of the calculation formulas may change as the water electrolysis module 2 deteriorates. That is, since the coefficient in the calculation formula is a physical property value for each configuration of the water electrolysis module 2, the appropriate value can change according to the state of the water electrolysis module 2. For each period, the first calculating unit 42 corrects the coefficients included in each calculation formula so that the calculation voltage $V_{sim}$ is close to the measurement voltage $V_{obs}$. The correction is only required to be performed on at least one coefficient. Specifically, when, for example, the equation (6) is used for the term of the activation overvoltage $\eta_{act}$, any one of $\alpha$, $i_0$, and $E_{exc}$ may be corrected, the rest being substituted with a literature data. Specifically, when, for example, the formula (9) is used for the term of the resistance overvoltage $\eta_{IR}$, any one of $\sigma$ and $E_{pro}$ may be corrected, the rest being substituted with a literature data. When a coefficient is calculated in the first period, a literature data may be used as the initial value of the coefficient.

For example, the dataset acquired in each period includes a combination of reaction condition values at a plurality of times and the measurement voltage $V_{obs}$ at the times. The first calculating unit 42 corrects the coefficient of the voltage calculation formula using the combination of a plurality of reaction condition values and the measurement voltages $V_{obs}$. The correction of the coefficient can be performed by a known correction method such as curve fitting by the least squares method. As a result, the first calculating unit 42 calculates a parameter group including the corrected coefficient as a component for each period. When only some coefficients are corrected, the parameter group also includes coefficients as literature data or the like.

The second calculating unit 44 substitutes a predetermined reaction condition value into each of two calculation formulas in which the parameter group in each period is incorporated, thereby calculating a comparison target value for each period. The predetermined reaction condition value is not a value included in the dataset but a value that can be appropriately set based on an experiment, simulation, or the like. Examples of the comparison target value include the calculated voltage $V_{sim}$, the activation overvoltage $\eta_{act}$, and the resistance overvoltage $\eta_{IR}$.

The third calculating unit 46 calculates a deterioration degree based on a difference between: a first comparison target value calculated from the calculation formula in which the parameter group in the first period is incorporated; and a second comparison target value calculated from the calculation formula in which the parameter group in the second period is incorporated. This deterioration degree corresponds to the progress of the deterioration state of the water electrolysis module 2 in the second period based on the deterioration state of the water electrolysis module 2 in the first period. As another embodiment, without using the comparison target value, the fourth calculating unit (not illustrated) may calculate a deterioration degree by directly comparing at least one of the coefficients constituting the parameter group for each period with each other.

When the calculated voltage $V_{sim}$ is used as the comparison target value, a calculated voltage $V_{sim}1$ is calculated from the calculation formula in which the parameter group in the first period is incorporated. In addition, a calculated voltage $V_{sim}2$ is calculated from the calculation formula in which the parameter group in the second period is incorporated. Then, a first deterioration degree d1 is calculated based on the difference between the two calculated voltages $V_{sim}$.

Specifically, the second calculating unit 44 substitutes a predetermined reaction condition value into the voltage calculation formula in which the parameter group in the first period is incorporated to calculate the calculated voltage $V_{sim}1$. In addition, the voltage calculation formula in which the parameter group in the second period is incorporated is substituted with the same reaction condition value, thereby the calculated voltage $V_{sim}2$ is calculated. Then, the third calculating unit 46 calculates the first deterioration degree d1 using, for example, the formula (12).

$$(12) \quad d1 = (V_{sim}2 - V_{sim}1)/V_{sim}1$$

In addition, the second calculating unit 44 of the present embodiment calculates an activation overvoltage $\eta_{act}1$ in the first period and an activation overvoltage $\eta_{act}2$ in the second period using the parameter group in each period. The third calculating unit 46 calculates a second deterioration degree d2 of the water electrolysis module 2 based on the difference between the two activation overvoltages $\eta_{act}$.

Specifically, the second calculating unit 44 substitutes a predetermined reaction condition value into the term of the activation overvoltage $\eta_{act}$ in the voltage calculation formula in which the parameter group in the first period is incorporated to calculate the activation overvoltage $\eta_{act}1$. In addition, the term of the activation overvoltage $\eta_{act}$ in the voltage calculation formula in which the parameter group in the second period is incorporated is substituted with the same predetermined reaction condition value, thereby the activation overvoltage $\eta_{act}2$ is calculated. Then, the third calculating unit 46 calculates the second deterioration degree d2 using, for example, the formula (13).

$$(13)\ d2 = (\eta_{act}2 - \eta_{act}1)/\eta_{act}1$$

The deterioration state of the catalyst layer 12a of the oxygen generating electrode 12 can be determined by calculating the second deterioration degree d2 as described above. Therefore, the deterioration state of the water electrolysis module 2 can be estimated in more detail.

In addition, the second calculating unit 44 of the present embodiment calculates a resistance overvoltage $\eta_{IR}1$ in the first period and a resistance overvoltage $\eta_{IR}2$ in the second period using the parameter group in each period. The third calculating unit 46 calculates a third deterioration degree d3 of the water electrolysis module 2 based on the difference between the two resistance overvoltages $\eta_{IR}$.

Specifically, the second calculating unit 44 substitutes a predetermined reaction condition value into the term of the resistance overvoltage $\eta_{IR}$ in the voltage calculation formula in which the parameter group in the first period is incorporated to calculate the resistance overvoltage $\eta_{IR}1$. The term of the resistance overvoltage $\eta_{IR}$ in the voltage calculation formula in which the parameter group in the second period is incorporated is substituted with the same reaction condition value, thereby the resistance overvoltage $\eta_{IR}2$ is calculated. Then, the third calculating unit 46 calculates the third deterioration degree d3 using, for example, the formula (14).

$$(14)\ d3 = (\eta_{IR}2 - \eta_{IR}1)/\eta_{IR}1$$

The deterioration state of the membrane 20 can be determined by calculating the third deterioration degree d3 as described above. Therefore, the deterioration state of the water electrolysis module 2 can be estimated in more detail.

The third calculating unit 46 can quantitatively determine the progress of deterioration of the water electrolysis module 2 based on each of the first deterioration degree d1, the second deterioration degree d2, and the third deterioration degree d3, based on a combination of two or more, or based on both. For example, for each of the first deterioration degree d1 to the third deterioration degree d3, threshold values $d1_0$ to $d3_0$ for deterioration degree to give a standard whether or not the water electrolysis module 2 should be replaced are set in advance and stored in the device 40 for supporting deterioration determination. The threshold values d1o to d3o can be appropriately set based on experiments, simulations, and the like. The third calculating unit 46 can calculate remaining life $t_d$ of the water electrolysis module 2, in other words, the replacement time of the water electrolysis module 2, using the formula (15).

$$(15)\quad t_d = \min\left(\frac{d1_0 - d1}{\dfrac{d1}{t2 - t1}},\quad \frac{d2_0 - d2}{\dfrac{d2}{t2 - t1}},\quad \frac{d3_0 - d3}{\dfrac{d3}{t2 - t1}}\right)$$

In the formula (15), t1 is a time at the center of the first period. t2 is a time at the center of the second period.

The notification unit 48 notifies the user that the replacement time of the water electrolysis module 2 has come when at least one of the first deterioration degree d1 to the third deterioration degree d3 exceeds the threshold. The notification method is not particularly limited, and a known method such as generating a notification sound and lighting a notification lamp can be adopted. The notification unit 48 may notify the user when two or more of the first deterioration degree d1 to the third deterioration degree d3 exceed the threshold, or when all the deterioration degrees exceed the threshold. When the device 1 for water electrolysis includes a plurality of the water electrolysis modules 2, the first deterioration degree d1 to the third deterioration degree d3 for each water electrolysis module 2 can be calculated to individually determine the replacement time of each water electrolysis module 2. The notification unit 48 can be omitted.

The driving support unit 50 compares the ratio ($d2/d2_0$) of the second deterioration degree d2 to the threshold value $d2_0$ with the ratio ($d3/d3_0$) of the third deterioration degree d3 to the threshold value $d3_0$. For example, in the case of $d2/d2_0 > d3/d3o$, the control device 10 is given an instruction on operating conditions to avoid operation causing deterioration of the catalyst layer 12a of the oxygen generating electrode 12. For example, in the case of $d3/d3o > d2/d2o$, the control device 10 is given an instruction on operating conditions to avoid operation causing deterioration of the membrane 20. A constant C may be added to the ratio ($d3/d3_0$) of the third deterioration degree d3 to the threshold value d3o to obtain $d3/d3o + C$. Thus, the life of the water electrolysis module 2 can be prolonged. The operation method for suppressing deterioration of the catalyst layer 12a or the membrane 20 can be appropriately set based on experiments, simulations, and the like. The driving support unit 50 can be omitted.

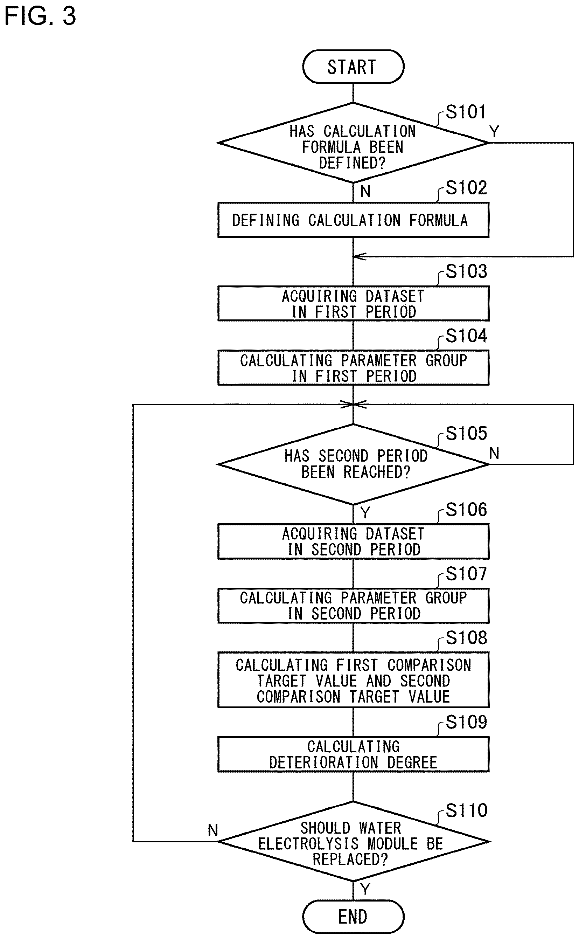

Fig. 3 is a flowchart of a method for supporting deterioration determination according to an example. In the present method, first, it is determined whether a predetermined calculation formula has been defined (S101). If no calculation formula is defined (N in S101), a predetermined calculation formula is defined (S102). Determination on whether a calculation formula has been defined and definition on the calculation formula may be performed by the user of the device 40 for supporting deterioration determination or may be performed by the device 40 for supporting deterioration determination.

Next, a dataset in the first period is acquired (S103). The dataset is provided by the sensor 38. If a calculation formula is defined (Y in S101), the calculation formula-defining process is skipped, and the dataset in the first period is acquired. Subsequently, a parameter group in the first period is calculated using the defined calculation formula and the acquired dataset (S104). The parameter group in the first period is provided by the device 40 for supporting deterioration determination. The fact that the first period has been reached, in other words, the calculation timing of the parameter group in the first period may be given as an instruction by the user or the like from the outside, or may be given by a program set in advance in the device 40 for supporting deterioration determination.

Subsequently, it is determined whether the second period, in which the deterioration state of the water electrolysis module 2 is desired to be measured, has been reached (S105). If the second period has not been reached (N in S105), the determination process (S105) as to whether the second period has been reached is repeated. If the second period is reached (Y in S105), a dataset in the second period is acquired (S106). The dataset is provided by the sensor 38 and the device 40 for supporting deterioration determination. Subsequently, a parameter group in the second period is calculated using the defined calculation formula and the acquired dataset (S107). The parameter group in the second period is provided by the device 40 for supporting deterioration determination. The fact that the second period has been reached, in other words, the calculation timing of the parameter group in the second period may be given as an instruction by the user or the like from the outside, or may be given by a program set in advance in the device 40 for supporting deterioration determination.

Subsequently, the first comparison target value and the second comparison target value are calculated using the calculation formula in which the parameter group in the first period is incorporated and the calculation formula in which the parameter group in the second period is incorporated (S108). Then, the deterioration degree of the water electrolysis module 2 is calculated based on the difference between the first comparison target value and the second comparison target value (S109). The deterioration degree is provided by the device 40 for supporting deterioration determination. The calculated deterioration degree is notified to the user. Accordingly, the user can grasp the replacement time of the water electrolysis module 2. Further, operation control of the water electrolysis module 2 according to the deterioration degree is executed.

Subsequently, it is determined whether the water electrolysis module 2 has been replaced (S110). If the water electrolysis module 2 has been replaced (Y in S110), this flow ends. Then, the flow of the method for supporting deterioration determination is newly executed for the replaced water electrolysis module 2. In the new flow, the calculation formula defined in the previous flow is diverted (Y in S101). Note that the calculation formula may be redefined for each execution of the flow, or may be redefined at an arbitrary timing. If the water electrolysis module 2 has not been replaced (N in S110), the process of determining whether the second period has been reached (S105) to the process of calculating deterioration degree (S109) are repeated. The water electrolysis module 2 is replaced by the user. The device 40 for supporting deterioration determination determines whether or not replacement is performed.

As described above, the device 1 for water electrolysis according to the present embodiment includes the water electrolysis module 2 and the device 40 for supporting deterioration determination. The device 40 for supporting deterioration determination includes the first calculating unit 42, the second calculating unit 44, and the third calculating unit 46.

According to the present embodiment, the progressively deteriorated water electrolysis module 2 is quickly replaced and the operation state is controlled according to the degree of deterioration, which can stabilize the water electrolysis module in hydrogen production efficiency to stabilize the function as an energy storage system. The deterioration of the water electrolysis module 2 can be grasped based on the electrolysis voltage, which increases along with the deterioration. Therefore, in conventional deterioration determination methods, the reaction conditions (temperature and current) of the water electrolysis module 2 are fixed to specific conditions, and the deterioration is determined from the voltage at that time. However, the operation of measuring the voltage while fixing the reaction conditions of the water electrolysis module 2 is different from the operation during the normal operation of the water electrolysis module 2, which may prevent the water electrolysis module 2 from producing hydrogen. Therefore, a method for determining the deterioration of the water electrolysis module 2 without disturbing normal operation of the water electrolysis module 2 is desired.

In contrast, in the present embodiment, a dataset during normal operation of the water electrolysis module 2 is acquired over time. This dataset includes a reaction condition value to be substituted into the calculation formula and the measurement voltage $V_{obs}$ to be used for correcting the coefficient. Subsequently, the coefficient included in each calculation formula is corrected so that the calculated voltage $V_{sim}$ obtained by substituting the reaction condition value into the calculation formula is close to the measurement voltage $V_{obs}$, and the parameter group in each period is obtained. Subsequently, the first comparison target value and the second comparison target value are calculated using the parameter group in the first period and the parameter group in the second period. Then, the deterioration degree of the water electrolysis module 2 is calculated based on the difference between the first comparison target value and the second comparison target value.

The comparison target value calculated by the above-described method includes information on the deterioration state of the water electrolysis module 2 in the period. The comparison target value does not depend on the operating condition of the water electrolysis module 2. Therefore, it is possible to more precisely estimate the deterioration state of the water electrolysis module 2 while keeping the normal operation of the water electrolysis module 2 without performing a special operation for deterioration determination. Therefore, the device 40 for supporting deterioration determination and the method for supporting deterioration determination according to the present embodiment can support the deterioration determination of the water electrolysis module 2 during the normal operation. In addition, since the replacement time of the water electrolysis module 2 can be more precisely grasped, an increase in labor and cost due to unnecessary replacement can be suppressed.

The water electrolysis module 2 of the present embodiment includes the oxygen generating electrode 12, the hydrogen generating electrode 16, and the membrane 20 separating these electrodes. The calculation formula used for calculating the parameter group is a formula for calculating the calculated voltage $V_{sim}$ by adding the equilibrium potential u of the water electrolysis reaction, the activation overvoltage $\eta_{act}$ of the oxygen generating reaction, and the resistance overvoltage $\eta_{IR}$ of the membrane 20.

The embodiments may be identified by the items described below.

[Item 1]

A device (40) for supporting deterioration determination, the device including:

a first calculating unit (42) that: acquires a dataset including a plurality of reaction condition values and a voltage each of which is measured, or derived from a value measured, in a first period and in a second period after the first period and related to a water electrolysis reaction in a water electrolysis module (2); and uses the dataset and a predetermined calculation formula to calculate a parameter group of the calculation formula for each period;
a second calculating unit (44) that substitutes a predetermined reaction condition value in the calculation formula in which the parameter group is incorporated to calculate a comparison target value for each period; and
a third calculating unit (46) that calculates a deterioration degree of the water electrolysis module (2) based on a difference between: a first comparison target value calculated from the calculation formula in which the parameter group in the first period is incorporated; and a second comparison target value calculated from the calculation formula in which the parameter group in the second period is incorporated.

[Item 2]

The device (40) for supporting deterioration determination according to item 1, wherein

the water electrolysis module (2) has an oxygen generating electrode (12), a hydrogen generating electrode (16), and a membrane (20) that separates the oxygen generating electrode (12) and the hydrogen generating electrode (16), and
the calculation formula adds an equilibrium potential (u) of the water electrolysis reaction, an activation overvoltage ($\eta_{act}$) of an oxygen generating reaction, and a resistance overvoltage ($\eta_{IR}$) of the membrane (20) to calculate a voltage ($V_{sim}$).

[Item 3]

The device (40) for supporting deterioration determination according to item 2, wherein the comparison target value is any of the voltage ($V_{sim}$), the activation overvoltage ($\eta_{act}$), and the resistance overvoltage ($\eta_{IR}$), or a combination of two or more thereof.

[Item 4]

A device (40) for supporting deterioration determination, the device including:

a first calculating unit (42) that: acquires a dataset including a plurality of reaction condition values and a voltage each of which is measured, or derived from a value measured, in a first period and in a second period after the first period and related to a water electrolysis reaction in a water electrolysis module (2); and uses the dataset and a predetermined calculation formula to calculate a parameter group of the calculation formula for each period; and a fourth calculating unit that calculates a deterioration degree of the water electrolysis module (2) based on a difference between: at least one coefficient constituting the parameter group in the first period; and the coefficient in the second period.

[Item 5]

The device (40) for supporting deterioration determination according to any one of items 1 to 4, wherein, the first period is a period where the water electrolysis module (2) presumably has not been deteriorated.

[Item 6]

A device (1) for water electrolysis, comprising:

a water electrolysis module (2); and
the device (40) for supporting deterioration determination according to any one of items 1 to 5.

[Item 7]

A method for supporting deterioration determination, the method including:

acquiring a dataset including a plurality of reaction condition values and a voltage each of which is related to a water electrolysis reaction in a water electrolysis module (2), in a first period and in a second period after the first period;
using the dataset and a predetermined calculation formula to calculate a parameter group of the calculation formula for each period;
substituting a predetermined reaction condition value in the calculation formula in which the parameter group is incorporated to calculate a comparison target value for each period; and
calculating a deterioration degree of the water electrolysis module (2) based on a difference between: a first comparison target value calculated from the calculation formula in which the parameter group in the first period is incorporated; and a second comparison target value calculated from the calculation formula in which the parameter group in the second period is incorporated.

[Item 8]

A renewable energy fluctuation absorbing system including the device (1) for water electrolysis according to item 6.

[Item 9]

A maintenance system for a water electrolysis module (2), the maintenance system including:

a third calculating unit (46) that calculates a replacement time of the water electrolysis module (2) from a deterioration degree of the water electrolysis module (2); and
a notification unit (48) that notifies the replacement time of the water electrolysis module (2).

[Item 10]

A driving support system for a water electrolysis module (2), the driving support system including:

a third calculating unit (46) that calculates a deterioration degree of the water electrolysis module (2); and
a driving support unit (50) that instructs operating conditions of the water electrolysis module (2) based on the calculated deterioration degree.

[EXAMPLES]

Hereinafter, Examples of the present invention will be described, but Examples are merely an example for suitably describing the present invention, and do not limit the present invention at all.

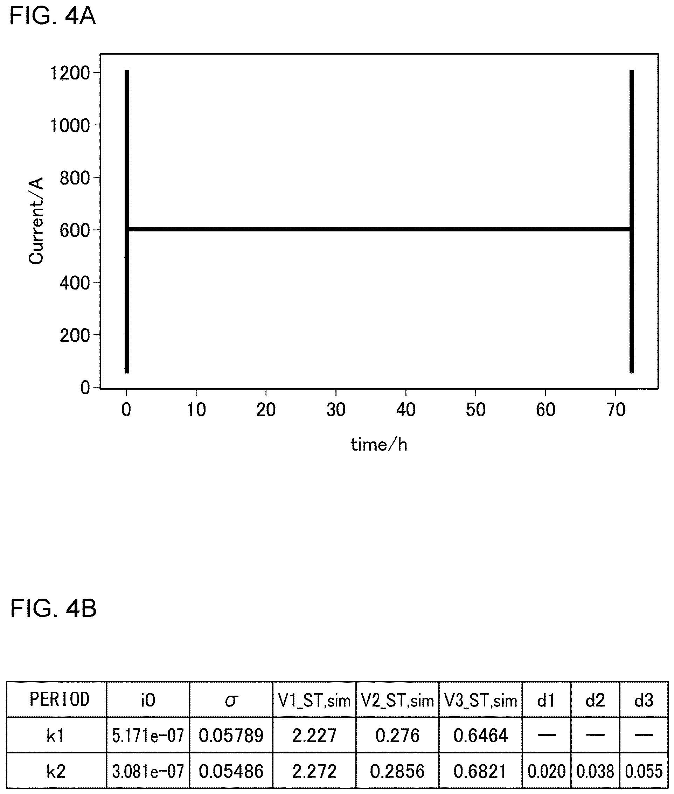

A water electrolysis operation test was performed for 3 days using a PEM type water electrolysis module of 3 $Nm^3$/h. Fig. 4A is a graph showing a relationship between time and current in a water electrolysis operation test performed in Examples. As shown in Fig. 4A, the current was kept constant during the water electrolysis operation test. In addition, 40 minutes after the start of the water electrolysis operation test was set as the first period (k1), and 40 minutes before the end was set as the second period (k2). The parameter group in each period was calculated using the dataset acquired in each of the first period and the second period, the voltage calculation formula, and a curve fitting method by the least squares method.

In the voltage calculation formula, the equation (6) was used for the term of the activation overvoltage $\eta_{act}$. Among the coefficients related to the activation overvoltage $\eta_{act}$, the coefficient to be corrected was the exchange current density $i_0$. For the charge transfer coefficient $\alpha$ and the activation energy of electron transfer $E_{exc}$, literature data were substituted, which means $\alpha = 0.7$, and $E_{exc} = 53,000$ J/mol. The equation (9) was used for the term of the resistance overvoltage $\eta_{IR}$. Among the coefficients related to the resistance overvoltage $\eta_{IR}$, the coefficient to be corrected was the proton conductivity $\sigma$. For the proton transfer activation energy $E_{pro}$, literature data was substituted, which means $E_{pro} = 10,000$ J/mol.

Predetermined reaction condition values were substituted in the voltage calculation formula in which the generated parameter group for each period was incorporated, thereby calculating the voltage $V_{sim}$ (V1_ST,sim), the activation overvoltage $\eta_{act}$ (V2_ST,sim), and the resistance overvoltage $\eta_{IR}$ (V3_ST,sim) in each period. A current of 1200 A, a water temperature of 30°C, a hydrogen generation pressure of 0.6 MPaG, and an oxygen generation pressure of 0.595 MPaG were substituted for the predetermined reaction condition values. The first deterioration degree d1, the second deterioration degree d2, and the third deterioration degree d3 were calculated based on the obtained calculated voltage $V_{sim}$, activation overvoltage $\eta_{act}$, and resistance overvoltage $\eta_{IR}$. The results are shown in Fig. 4B.

Fig. 4B is a chart showing a corrected parameter groups, various voltages, and deterioration degrees in Examples. As shown in Fig. 4B, the amount of increase in the activation overvoltage $\eta_{act}$ was about 10 mV (V2_ST,sim (k2) - V2_ST,sim (k1)). The amount of increase in the resistance overvoltage $\eta_{IR}$ was about 35 mV (V3_ST,sim (k2) - V3_ST,sim (k1)). The second deterioration degree d2 was 0.038, and the third deterioration degree d3 was 0.055. From this result, it was grasped that the deterioration of the membrane 20 progressed more than the deterioration of the catalyst layer 12a of the oxygen generating electrode 12 by the water electrolysis operation test. From the above, it has been shown that the deterioration state of the water electrolysis module 2 can be quantified by the device 40 for supporting deterioration determination and the method for supporting deterioration determination according to the present disclosure, thereby supporting the deterioration determination.

[INDUSTRIAL APPLICABILITY]

The present invention can be utilized for a device for supporting deterioration determination, a device for water electrolysis, and a method for supporting deterioration determination.

[REFERENCE SIGNS LIST]

1 device for water electrolysis, 2 water electrolysis module, 12 oxygen generating electrode, 16 hydrogen generating electrode, 20 membrane, 38 sensor, 40 device for supporting deterioration determination, 42 first calculating unit, 44 second calculating unit, 46 third calculating unit.

**Claims**

**1.** A device for supporting deterioration determination, the device comprising:

a first calculating unit that: acquires a dataset including a plurality of reaction condition values and a voltage each of which is measured, or derived from a value measured, in a first period and in a second period after the first period and related to a water electrolysis reaction in a water electrolysis module; and uses the dataset and a predetermined calculation formula to calculate a parameter group of the calculation formula for each period; a second calculating unit that substitutes a predetermined reaction condition value in the calculation formula in which the parameter group is incorporated to calculate a comparison target value for each period; and a third calculating unit that calculates a deterioration degree of the water electrolysis module based on a difference between: a first comparison target value calculated from the calculation formula in which the parameter group in the first period is incorporated; and a second comparison target value calculated from the calculation formula in which the parameter group in the second period is incorporated.

2. The device for supporting deterioration determination according to claim 1, wherein

the water electrolysis module has an oxygen generating electrode, a hydrogen generating electrode, and a membrane that separates the oxygen generating electrode and the hydrogen generating electrode, and the calculation formula adds an equilibrium potential of the water electrolysis reaction, an activation overvoltage of an oxygen generating reaction, and a resistance overvoltage of the membrane to calculate a voltage.

3. The device for supporting deterioration determination according to claim 2, wherein the comparison target value is any of the voltage, the activation overvoltage, and the resistance overvoltage, or a combination of two or more thereof.

4. A device for supporting deterioration determination, the device comprising:

a first calculating unit that: acquires a dataset including a plurality of reaction condition values and a voltage each of which is measured, or derived from a value measured, in a first period and in a second period after the first period and related to a water electrolysis reaction in a water electrolysis module; and uses the dataset and a predetermined calculation formula to calculate a parameter group of the calculation formula for each period; and a fourth calculating unit that calculates a deterioration degree of the water electrolysis module based on a difference between: at least one coefficient constituting the parameter group in the first period; and the coefficient in the second period.

5. The device for supporting deterioration determination according to any one of claims 1 to 4, wherein, the first period is a period where the water electrolysis module presumably has not been deteriorated.

6. A device for water electrolysis, comprising:

a water electrolysis module; and the device for supporting deterioration determination according to any one of claims 1 to 5.

7. A method for supporting deterioration determination, the method comprising:

acquiring a dataset including a plurality of reaction condition values and a voltage each of which is related to a water electrolysis reaction in a water electrolysis module, in a first period and in a second period after the first period; using the dataset and a predetermined calculation formula to calculate a parameter group of the calculation formula for each period; substituting a predetermined reaction condition value in the calculation formula in which the parameter group is incorporated to calculate a comparison target value for each period; and calculating a deterioration degree of the water electrolysis module based on a difference between: a first comparison target value calculated from the calculation formula in which the parameter group in the first period is incorporated; and a second comparison target value calculated from the calculation formula in which the parameter group in the second period is incorporated.

FIG. 1

CONTROL DEVICE — 10

DEVICE FOR SUPPORTING DETERIORATION DETERMINATION — 40, 42

FIRST CALCULATING UNIT

SECOND CALCULATING UNIT — 44

THIRD CALCULATING UNIT — 46

NOTIFICATION UNIT — 48

DRIVING SUPPORT UNIT — 50

EP 4 324 959 A1

FIG. 2

# FIG. 3

```
          ┌─────────────┐
          │    START    │
          └─────────────┘
                 │
            ╱─────────╲              ⌐S101
           ╱ HAS CALCULATION╲   Y
          ╱  FORMULA BEEN    ╲──────────┐
          ╲   DEFINED?       ╱          │
           ╲─────────────── ╱           │
                 │ N    ⌐S102            │
          ┌─────────────────────┐       │
          │ DEFINING CALCULATION│       │
          │      FORMULA        │       │
          └─────────────────────┘       │
                 │◄────────────────────┘
                 │          ⌐S103
          ┌─────────────────────┐
          │  ACQUIRING DATASET  │
          │   IN FIRST PERIOD   │
          └─────────────────────┘
                 │          ⌐S104
          ┌─────────────────────┐
          │ CALCULATING PARAMETER│
          │  GROUP IN FIRST PERIOD│
          └─────────────────────┘
                 │
    ┌────────────┼
    │       ╱─────────╲          ⌐S105
    │      ╱ HAS SECOND ╲    N
    │     ╱ PERIOD BEEN   ╲──────────┐
    │     ╲  REACHED?     ╱          │
    │      ╲───────────── ╱          │
    │            │ Y   ⌐S106         │
    │     ┌─────────────────┐        │
    │     │ ACQUIRING DATASET│       │
    │     │ IN SECOND PERIOD │       │
    │     └─────────────────┘        │
    │            │     ⌐S107         │
    │     ┌─────────────────┐        │
    │     │CALCULATING PARAM.│       │
    │     │ GROUP IN SECOND  │       │
    │     │     PERIOD       │       │
    │     └─────────────────┘        │
    │            │     ⌐S108         │
    │     ┌─────────────────────┐    │
    │     │ CALCULATING FIRST   │    │
    │     │ COMPARISON TARGET   │    │
    │     │ VALUE AND SECOND    │    │
    │     │ COMPARISON TARGET   │    │
    │     │      VALUE          │    │
    │     └─────────────────────┘    │
    │            │     ⌐S109         │
    │     ┌─────────────────┐        │
    │     │   CALCULATING   │        │
    │     │ DETERIORATION   │        │
    │     │    DEGREE       │        │
    │     └─────────────────┘        │
    │            │                   │
    │       ╱─────────╲         ⌐S110│
    │  N   ╱  SHOULD WATER╲           │
    └─────╱ ELECTROLYSIS   ╲◄────────┘
          ╲ MODULE BE      ╱
           ╲ REPLACED?    ╱
            ╲─────────── ╱
                 │ Y
          ┌─────────────┐
          │     END     │
          └─────────────┘
```

FIG. 4A

FIG. 4B

| PERIOD | i0 | σ | V1_ST,sim | V2_ST,sim | V3_ST,sim | d1 | d2 | d3 |
|--------|-----|---|-----------|-----------|-----------|------|------|------|
| k1 | 5.171e-07 | 0.05789 | 2.227 | 0.276 | 0.6464 | — | — | — |
| k2 | 3.081e-07 | 0.05486 | 2.272 | 0.2856 | 0.6821 | 0.020 | 0.038 | 0.055 |

## INTERNATIONAL SEARCH REPORT

International application No.

**PCT/JP2021/047525**

**A. CLASSIFICATION OF SUBJECT MATTER**

*C25B 15/023*(2021.01)i; *C25B 1/04*(2021.01)i; *C25B 9/00*(2021.01)i; *C25B 9/23*(2021.01)i; *C25B 15/00*(2006.01)i
FI:  C25B15/023; C25B1/04; C25B9/00 A; C25B9/23; C25B15/00 302Z

According to International Patent Classification (IPC) or to both national classification and IPC

**B. FIELDS SEARCHED**

Minimum documentation searched (classification system followed by classification symbols)

C25B1/00-15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-530483 A (RECHERCHE 2000 INC) 14 October 2003 (2003-10-14)<br>paragraphs [0023]-[0031], fig. 4-6 | 1-7 |
| A | JP 2010-121146 A (HITACHI ZOSEN CORP) 03 June 2010 (2010-06-03) | 1-7 |
| A | JP 2013-525603 A (RECHERCHE 2000 INC) 20 June 2013 (2013-06-20) | 1-7 |
| A | JP 2014-520963 A (THYSSENKRUPP UHDE GMBH) 25 August 2014 (2014-08-25) | 1-7 |
| A | US 2006/0289312 A1 (RECHERCHE 2000 INC) 28 December 2006 (2006-12-28) | 1-7 |
| A | US 2007/0125641 A1 (RANTALA, Ari) 07 June 2007 (2007-06-07) | 1-7 |
| A | US 2009/0014326 A1 (BERRIAH, Said) 15 January 2009 (2009-01-15) | 1-7 |
| A | US 2015/0329980 A1 (HALDOR TOPSOE A/S) 19 November 2015 (2015-11-19) | 1-7 |

☐ Further documents are listed in the continuation of Box C.    ☑ See patent family annex.

| | | |
|---|---|---|
| *    Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier application or patent but published on or after the international filing date | "X" | document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&" | document member of the same patent family |
| "P"  document published prior to the international filing date but later than the priority date claimed | | |

| Date of the actual completion of the international search | Date of mailing of the international search report |
|---|---|
| **11 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/047525** |

| Patent document cited in search report | | | Publication date (day/month/year) | Patent family member(s) | | | Publication date (day/month/year) |
| --- | --- | --- | --- | --- | --- | --- | --- |
| JP | 2003-530483 | A | 14 October 2003 | US | 2001/0039481 | A1 | |
| | | | | paragraphs [0032]-[0053], fig. 4-6 | | | |
| | | | | WO | 2001/078164 | A2 | |
| | | | | EP | 1292723 | A1 | |
| | | | | AU | 5454001 | A | |
| | | | | CA | 2405636 | A | |
| JP | 2010-121146 | A | 03 June 2010 | (Family: none) | | | |
| JP | 2013-525603 | A | 20 June 2013 | WO | 2011/130819 | A1 | |
| | | | | CA | 2794737 | A | |
| JP | 2014-520963 | A | 25 August 2014 | US | 2015/0127279 | A1 | |
| | | | | WO | 2013/010630 | A1 | |
| | | | | EP | 2734660 | A1 | |
| | | | | DE | 102011107935 | A | |
| | | | | TW | 201305390 | A | |
| | | | | CA | 2841008 | A | |
| | | | | AR | 87234 | A | |
| | | | | CN | 103842556 | A | |
| | | | | EA | 201490079 | A | |
| US | 2006/0289312 | A1 | 28 December 2006 | WO | 2006/133562 | A1 | |
| | | | | EP | 1910588 | A1 | |
| | | | | ES | 2675333 | T | |
| | | | | PL | 1910588 | T | |
| | | | | HU | E039443 | T | |
| | | | | TR | 201808245 | T | |
| | | | | PT | 1910588 | T | |
| US | 2007/0125641 | A1 | 07 June 2007 | WO | 2005/052700 | A1 | |
| | | | | FI | 20031733 | A | |
| | | | | PE | 9152005 | A | |
| | | | | PE | 20050915 | A | |
| | | | | FI | 20031733 | A0 | |
| US | 2009/0014326 | A1 | 15 January 2009 | EP | 2006418 | A2 | |
| | | | | AT | 542931 | T | |
| | | | | ES | 2379405 | T | |
| | | | | PT | 2006418 | E | |
| | | | | PL | 2006418 | T | |
| US | 2015/0329980 | A1 | 19 November 2015 | WO | 2014/114348 | A1 | |
| | | | | EP | 2948576 | A1 | |
| | | | | CN | 105102684 | A | |
| | | | | RU | 2015135614 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018165392 A